# EUROPEAN PATENT SPECIFICATION

(11) **EP 1 677 426 B1**
(45) Date of publication and mention of the grant of the patent: **17.10.2007**
(21) Application number: 04258167.8
(22) Date of filing: 29.12.2004
(51) Int. Cl.: H04B 1/38, H01Q 1/24, H04M 1/02

(54) **Mobile wireless communications device with slidable configuration providing hearing aid compatibility features and corresponding implementing method**
Mobiles schnurloses aufschiebbares Telekommunikationsgerät mit Kompatibilitätsmerkmalen für Hörapparate und entsprechendes Herstellungsverfahren
Appareil portable de télécommunication sans fil avec un mécanisme d'ouverture coulissant ayant des propriétés de compabilités avec des appareils auditifs et méthode d'implementation correspondante

(43) Date of publication of application: 05.07.2006
(73) Proprietor: Research In Motion Limited, Waterloo, Ontario N2L 3W8 (CA)
(72) Inventor: Qi, Yihong, Waterloo, Ontario, N2T 2H3 (CA); Jarmuszewski, Perry, Guelph, Ontario, N2E SW4 (CA); Man, Ying Tong, Kitchener, Ontario, N2M 5G1 (CA)
(74) Representative: Roberts, Gwilym Vaughan

(56) References cited:
- DE-A1- 4 316 073
- US-A- 6 137 883
- "Manual: GPRS Telephone SGH-D500" November 2004 (2004-11), SAMSUNG ELECTRONICS , KOREA , XP002324577 * page 10 - page 11 * * page 16 - page 17 * * page 34 - page 35 * * page 200 - page 201 * * page 208 - page 209 *

## Description

### Field of the Invention

The present invention relates to the field of communications devices, and, more particularly, to mobile wireless communications devices and related methods.

### Background of the Invention

Cellular communications systems continue to grow in popularity and have become an integral part of both personal and business communications. Cellular telephones allow users to place and receive voice calls most anywhere they travel. Moreover, as cellular telephone technology has increased, so too has the functionality of cellular devices. For example, many cellular devices now incorporate personal digital assistant (PDA) features such as calendars, address books, task lists, etc. Moreover, such multi-function devices may also allow users to wirelessly send and receive electronic mail (email) messages and access the Internet via a cellular network.

Even so, as the functionality of cellular communications devices continues to increase, so too does the demand for smaller devices which are easier for users to carry. As a result, one style of cellular telephones which has gained wide popularity is the folding or "flip" phone. Flip phones typically have an upper housing with a display and speaker, and a lower housing or flap which carries the microphone. The keypad of such phones may be on either the upper housing or the lower housing, depending upon the particular model. The lower flap is connected to the upper housing by a hinge so that when not in use the upper and lower housings can be folded together to be more compact.

One example of a flip phone is disclosed in U.S. Patent No. 5,337,061 to Pye et al. The phone has two antennas, a first one of which is mounted on the lower flap and includes a ground plane and an active monopole fed by a coaxial feed from electronic circuitry inside the phone. The flap is pivotally connected to the main or upper section of the housing, and is folded against the main section when not in use. Another similar antenna is fitted in the main section, and both antennas are connected to transceiver circuitry in the phone. The antennas are designed to introduce deliberate mismatch to provide an effective switching system between the antennas without the need for separate circuit elements. Other examples of flip phones are disclosed in U.S. Patent Nos. 5,557,293 and 6,741,215.

Another compact style of cellular telephone is the so-called sliding phone. Sliding phones have upper and lower housings which are slidably connected to one another so that one housing slides over top of the other, and they slide relative to one another between a retracted position and an extended position. As such, these phones may also provide a relatively compact footprint when in the retracted position. Examples of sliding phones include the SL55 from Siemens Corporation, and the SCH-N330 from Samsung Electronics Co., Ltd.

One potential drawback of compact cellular telephone designs is that users with hearing aids may have difficulties using such phones. That is, the compact nature of such phones may place the user's hearing aid in close proximity to the phone's antenna. This, in turn, can cause undesired interference, which results in harmonics being introduced into the hearing aid. One approach for addressing this problem on a cellular telephone with an external antenna is disclosed in U.S. Patent No. 5,819,162 to Spann et al., in which an electromagnetic interference (EMI) shield is mounted on a flap that extends away from the base of the phone during operation to form an enclosure about the user's ear for shielding the user's hearing aid from EMI. However, such a configuration may not be feasible on compact sliding phones which have internal, printed circuit board (PCB) style antennas.

U.S. Patent No. 6,137,883 is directed to a cellular telephone that includes a first housing, a second housing, an attachment mechanism, a microphone, an earpiece and a keypad. The attachment mechanism is coupled to the first housing and the second housing and permit the first housing to be moveable relative to the second housing between a first (retracted) position and a second (extended) position. The microphone is carried by the first housing, and the earpiece is carried by the second housing. The keypad may be carried by either one of the first housing and the second housing. In certain embodiments, an elongated rod connects the housings and a telescoping mechanism permits the proximal end of the rod to slide in and out of the second and/or first housings. Moreover, the elongated rod also includes an antenna.

Manual: GPRS Telephone SGH-D500 is a user's manual for the Samsung SGH-D500 cellular telephone. The phone has upper and lower housings slideably connected to one another.

German Patent No. 43 16 073 is directed to a mobile wireless telephone which in one embodiment includes upper and lower housings slidably connected to one another, and an external antenna mounted on the bottom of the lower housing.

Further background art is provided in FR-A-2 679 086, which is directed to a wireless telephone including a handheld housing, transmitter-receiver circuitry in the housing including a microphone and a speaker, and an antenna mounted on the housing. In one embodiment the phone has a slidable housing, and a printed circuit antenna is carried on the lower portion of the slidable housing.

### Summary of the Invention

In view of the foregoing background, it is therefore an object of the present invention to provide a relatively compact mobile wireless communications device, such as a cellular telephone, which is also well-suited for use with electronic hearing aids and related methods.

This and other objects, features, and advantages in accordance with the present invention are provided by a mobile wireless communications device for a user wearing an electronic hearing aid adjacent an ear of the user. The mobile wireless communications device comprises an upper housing and a lower housing being slidably connected together for sliding relative to one another between a retracted position and an extended use position. The upper and lower housings each have respective top and bottom ends, and the top end of the upper housing is further separated from the bottom end of the lower housing when in the extended use position as compared to the retracted position. The mobile wireless communications device comprises an audio output transducer carried by the upper housing and accessible to the electronic hearing aid of the user adjacent the top end of the upper housing. An audio input transducer is carried by the lower housing and accessible to a mouth of the user adjacent the bottom end of the lower housing. Furthermore, an antenna is carried by the lower housing adjacent the bottom end thereof so that the electronic hearing aid of the user is further separated from the antenna when the upper and Lower housings are in the extended use position. Accordingly, undesired coupling from the antenna to the electronic hearing aid is thereby reduced. The antenna comprises a dielectric substrate and a plurality of conductive traces on the dielectric substrate. The antenna further comprises a single turn, main loop conductor having a gap therein defining first and second ends of the main loop conductor, and a floating tuning branch connected to the main loop conductor.

More particularly, the bottom of the upper housing may overlap the top of the lower housing in the extended use position defining an overlap region, and the antenna may be below the overlap region. A wireless circuit board may be carried by the lower housing, and at least one wireless communications circuit may be carried by the wireless communications circuit board. The at least one wireless communications circuit may be connected to the antenna.

In addition, the antenna may be carried within the lower housing. Moreover, the antenna may be a multi-frequency band antenna.

The mobile wireless communications device may further include a release catch for allowing movement of the upper housing and the lower housing between the retracted to the extended position. A display may be carried by the upper housing, while an input keypad and a battery may be carried by the lower housing. The input keypad may include a plurality of multi-symbol keys. Moreover, the symbols may be letters, and the multi-symbol keys may be arranged to define a QWERTY layout. Additionally, at least some of the multi-symbol keys may have numeric indicia thereon, and the at least some multi-symbol keys may be arranged to define a telephone keypad layout.

Method aspects of the invention include making a mobile wireless communications device, such as the one described briefly above, as well as making such a device hearing aid compatible by positioning the antenna therein as also briefly described above.

### Brief Description of the Drawings

FIG. 1 is a perspective view of a mobile wireless communications device in accordance with the present invention next to a user wearing an electronic hearing aid.

FIG. 2 is a front view of the mobile wireless communications device of FIG. 1 in a retracted position.

FIG. 3 is a front view of the mobile wireless communications device of FIG. 1 in an extended use position.

FIG. 4 is a perspective view of the mobile wireless communications device of FIG. 1 in the extended use position.

FIG. 5 is a schematic block diagram of the mobile wireless communications device of FIG. 1.

FIG. 6 is a schematic diagram of an exemplary antenna for use with the mobile wireless communications device of FIG. 1.

FIGS. 7 and 8 are perspective views of a PCB implementation of the antenna of FIG. 5.

FIG. 9 is a schematic block diagram illustrating exemplary components of a mobile wireless communications device in accordance with the present invention.

### Detailed Description of the Preferred Embodiments

The present invention will now be described more fully hereinafter with reference to the accompanying drawings, in which preferred embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like numbers refer to like elements throughout.

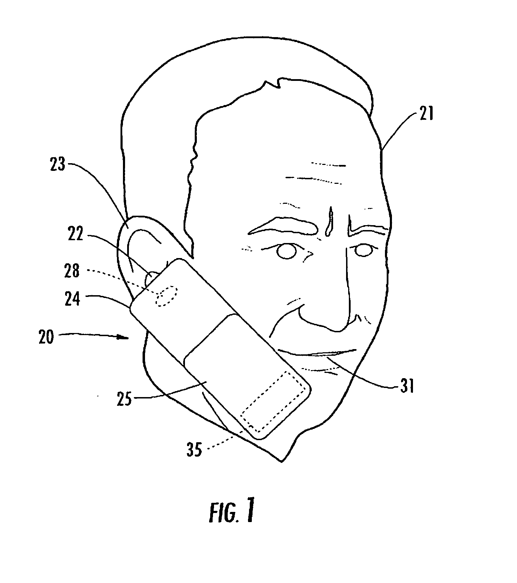

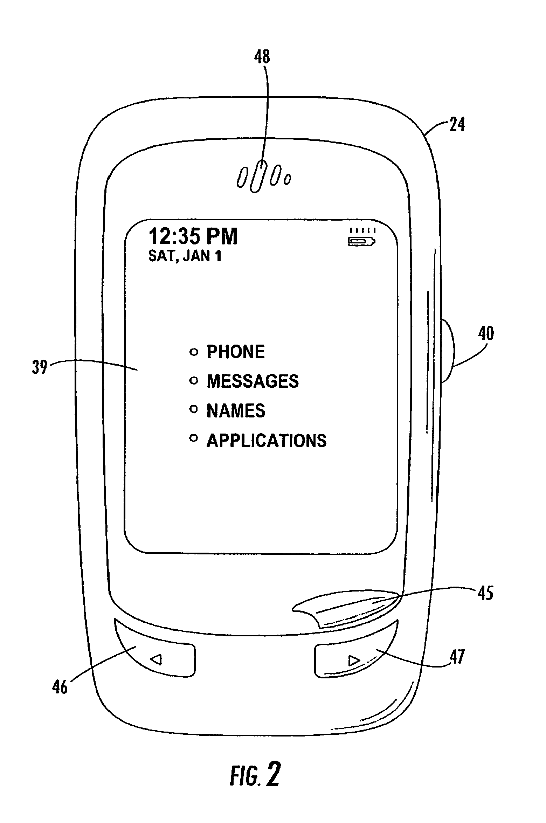

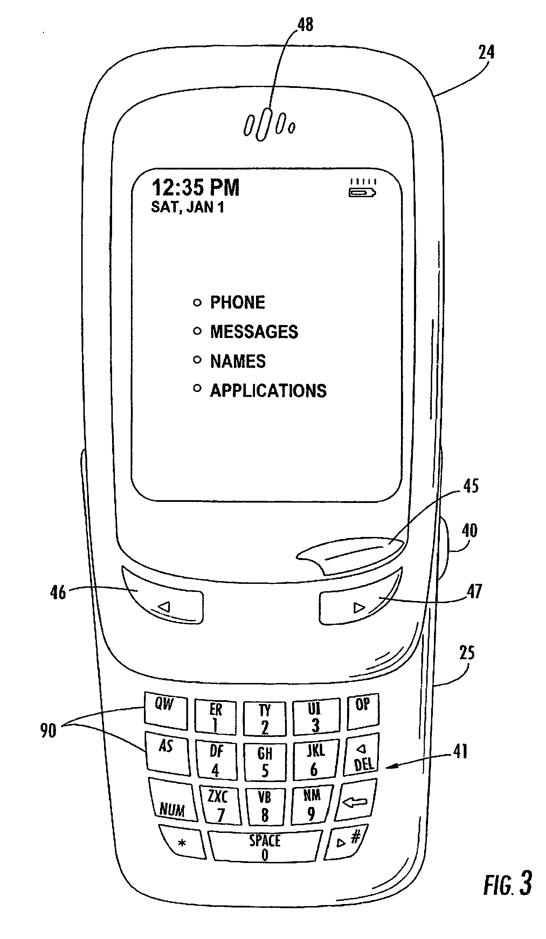

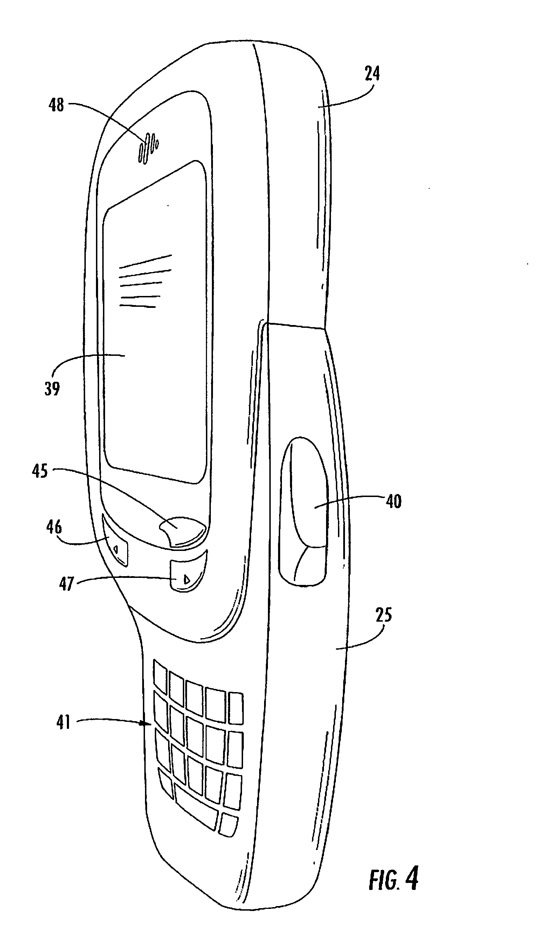

Referring initially to FIGS. 1 through 5, a mobile wireless communications device, such as a cellular telephone **20,** is for a user **21** wearing an electronic hearing aid **22** adjacent an ear **23** of the user. The cellular telephone **20** is a sliding phone which illustratively includes an upper housing **24** and a lower housing **25** being slidably connected together for sliding relative to one another between a retracted position (FIG. 2) and an extended use position (FIG. 3). A release catch **40** allows movement of the upper housing **24** and the lower housing **25** between the retracted and extended use positions, as will be appreciated by those skilled in the art.

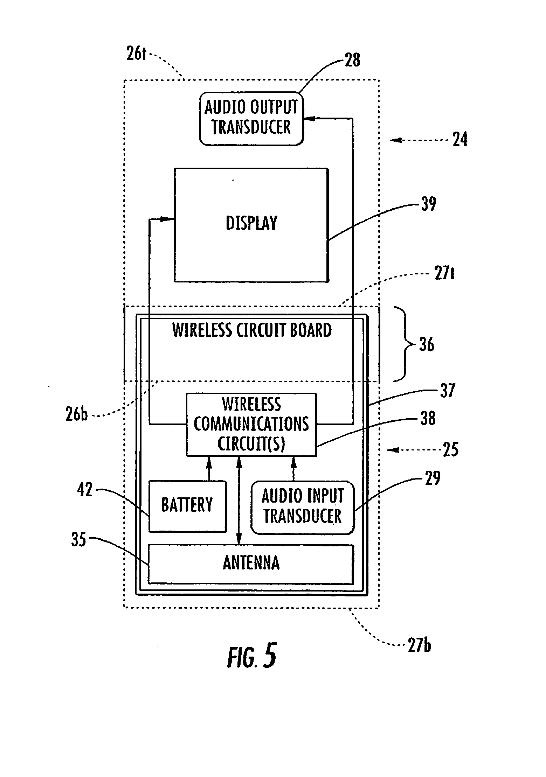

The upper and lower housings **24, 25** each have respective top and bottom ends **26t, 26b** and **27t, 27b** (see FIG. 5). The top end **26t** of the upper housing **24** is further separated from the bottom end **27b** of the lower housing **25** when in the extended use position as compared to the retracted position. When in the extended user position, an input keypad **41** carried by the lower housing **25** becomes accessible to the user. As shown in FIG. 3, the keypad **41** may include multi-symbol alphanumeric keys **90** that may be used not only for dialing telephone numbers, but also for sending e-mail or text messages, accessing an address or contact book, and running other applications (games, calendars, etc.), as will be appreciated by those skilled in the art. An on/off button **45** and scroll buttons **46, 47** are carried by the upper housing **24** and are accessible to the user **21** in both the retracted and extended use positions. The scroll buttons **46, 47** may be used for selecting menu options, e-mail messages, etc.

In particular, the multi-symbol keys **90** are arranged in the first (i.e., top) three rows on the keypad **41** (although other function keys are located in these rows as well). Furthermore, the letter symbols on each of the keys **90** are arranged to define a QWERTY layout. That is, the letters on the keypad **41** are presented in a three-row format, with the letters of each row being in the same order and relative position as in a standard QWERTY keyboard or keypad.

The first three rows of keys are further arranged in five columns. The multi-symbol keys **90** in the second, third, and fourth columns of the first, second, and third rows have numeric indicia thereon (i.e., 1 through 9) accessible by first actuating the NUM key in the third row. Together with the star ("*"), space/0, and shift/pound ("#") keys in the fourth row, these keys define a standard telephone keypad layout, as would be found on a traditional touch-tone telephone, as will be appreciated by those skilled in the art.

One particularly advantageous reason for placing multiple letters on the keys **90** is so that less than a full set of QWERTY keys, as found on a traditional computer/typewriter keyboard, can be used to access all of the English alphabet letters. This advantageously allows the footprint of the keypad **41** to remain relatively small which, in turn, allows the overall size of the cellular telephone **20** to be decreased as well.

Yet, placing multiple symbols on a single key may make typing (e.g., typing emails) more difficult for users. To make typing easier, the controller/microprocessor of the mobile wireless communications device **20** preferably allows symbols/text to be entered in two different modes, namely a multi-tap mode and a predictive mode. In the multi-tap mode, a user enters a desired symbol by pressing a given key a number of times corresponding to its position on the key. Thus, for example, for a user to enter a "W," he would press the QW key twice.

When in the predictive mode, the controller/microprocessor advantageously generates a menu of possible desired words using a stored dictionary of words based upon the key combination that is pressed. As the user presses more keys **90,** the possible choices are refined and narrowed. The words in the menu may also be editable so that the user can still enter a desired word or character string even if it is not in the dictionary, for example, as will be appreciated by the skilled in the art.

The cellular telephone **20** also illustratively includes an audio output transducer **28** (e.g., a speaker) carried by the upper housing **24** and accessible to the electronic hearing aid **22** of the user **21** adjacent the top end **26t** of the upper housing. Holes **48** may be formed in the upper housing **24** to allow sound from the audio output transducer **28** to pass therethrough to the ear **23** of the user **21.** An audio input transducer **29** is carried by the lower housing **25** and accessible to a mouth **31** of the user **21** adjacent the bottom end **27b** of the lower housing **25.**

Furthermore, an antenna **35** is illustratively carried by the lower housing **25** adjacent the bottom end **27b** thereof so that the electronic hearing aid **22** of the user **21** is further separated from the antenna when the upper and lower housings are in the extended use position. Because of the increased separation thus achieved between the antenna **35** and the electronic hearing aid **22** when in the extended use position, the cellular telephone **20** advantageously reduces undesired coupling from the antenna to the electronic hearing aid without the need for special shielding arrangements. Yet, this is done while retaining the benefits of the relatively compact sliding configuration.

More particularly, the bottom **26b** of the upper housing **24** overlaps the top **27t** of the lower housing **25** in the extended use position to define an overlap region **36** (FIG. 5), and the antenna **35** is illustratively positioned below the overlap region. The cellular telephone **20** further illustratively includes a wireless circuit board **37** (e.g., a printed circuit board (PCB)) carried by the lower housing **25,** with one or more wireless communications circuits **38** thereon, such as a wireless transceiver, connected to the antenna **35.** An exemplary implementation of the wireless communications circuitry **38** will be discussed further below.

A display **39** (e.g., an LCD display) is also illustratively carried by the upper housing **24** and connected to the circuitry **38.** Moreover, a battery **42** is also illustratively carried by the lower housing **25** for powering the circuitry **38** and display **39.** It should be noted that while the battery **42** is illustratively shown as being on the wireless circuit board **37** in FIG. 5, the battery need not be carried by the wireless circuit board **37** and is preferably removably connected thereto so that it may be replaced, etc., rather than being connected by a solder connection as the circuitry **38,** for example.

The antenna **35** is preferably an internal PCB antenna, in that it is carried within the lower housing **25** and is formed by a plurality of conductive traces on a dielectric substrate, i.e., on the dielectric substrate of the wireless circuit board **37.** Generally speaking, internal antennas are more convenient for users because they are less likely to get caught on other objects and allow a cellular telephone to have a smaller footprint than externally mounted antennas. Typically, internal PCB antennas are mounted at the top of the PCB of a cellular telephone adjacent the speaker. In the case of the above-noted Samsung SCH-N330 and Siemens SL55 sliding phones, the antennas are mounted at the top of the PCB within the overlap region between the upper and lower housings. Yet, as noted above, this places the antenna in relatively close proximity to the speaker, which may lead to undesirable coupling to the hearing aid of a user. However, the positioning of the antenna **35** adjacent a bottom end of the lower housing portion in the cellular telephone **20** advantageously reduces such coupling, while still allowing hearing impaired users to enjoy the compact profile of a sliding cellular telephone.

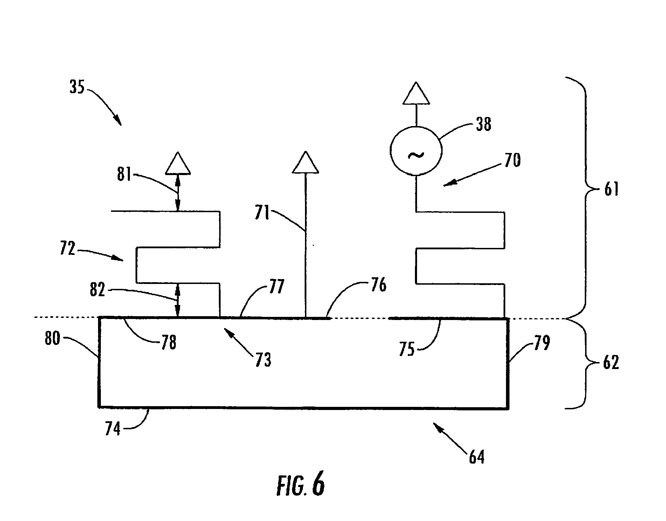

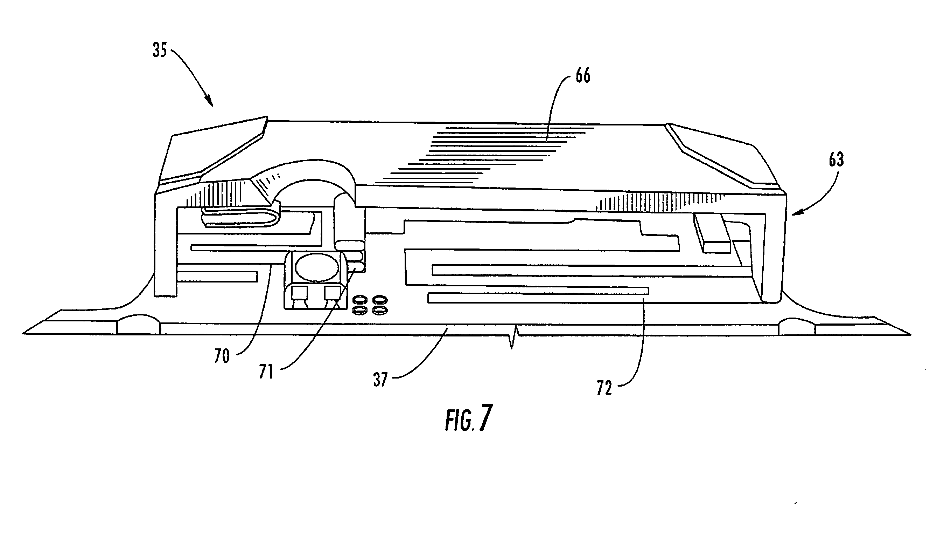

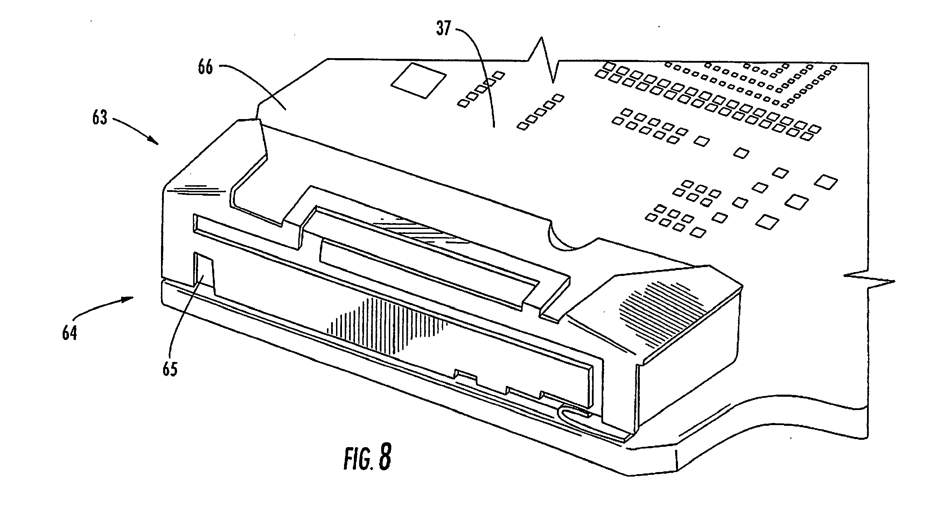

An exemplary implementation of the antenna **35** is now discussed with reference to FIGS. 6 through 8. More particularly, a basic two-dimensional (2D) layout of the antenna **35** is shown in FIG. 6 for clarity of illustration, and a three-dimensional (3D) implementation thereof is illustrated in FIGS. 7 and 8. The antenna **35** is preferably a multi-frequency band antenna which provides enhanced transmission and reception characteristics over multiple operating frequencies. More particularly, the antenna **35** is designed to provide high gain, a low specific absorption ratio (SAR), and a wide bandwidth over multiple cellular bands. By way of example, the antenna **35** preferably operates over five bands, namely a 850 MHz Global System for Mobile Communications (GSM) band, a 900 MHz GSM band, a DCS band, a PCS band, and a WCDMA band (i.e., up to about 2100 MHz), although it may be used for other bands/frequencies as well.

To conserve space, the antenna **35** may advantageously be implemented in three dimensions, as noted above. That is, the antenna **35** illustratively includes a first section **61** on the PCB **37.** A second section **62** wraps around from the PCB **37** onto an antenna retainer frame **63** and defines a main loop **64** of the antenna **35.** The first and second sections **61, 62** of the antenna **35** may be formed using printed or patterned conductive circuit traces, as will be appreciated by those skilled in the art.

More particularly, the second section **62** is positioned on a first side **65** of the retainer frame **63** that is perpendicular to the PCB **37.** This advantageously allows the overall footprint of the antenna **35** on the top (i.e., circuitry) side of the PCB **37** to be significantly reduced. Portions of the main loop **64** may also wrap around onto a second side **66** of the retainer frame **36** to provide still further space savings, as will be discussed further below. It should be noted, however, that the antenna **35** may be implemented in two dimensions (i.e., where the first and second sections **61, 62** are in the same plane), in certain embodiments if enough space is available, and that other 3D configurations are also possible, as will be appreciated by those skilled in the art.

The first section **61** generally includes a first branch **70** connecting the wireless communications circuitry **38** (which is generally indicated with a signal source symbol in FIG. 6) to the main loop **64,** a second branch **71** connecting the main loop to ground (e.g., the ground plane of the PCB **37)** (see FIG. 11), and a tuning branch **72** also connected to the main loop. The main loop **64** is defined by sections **75, 79, 74, 80,** and **73.** The branch **70** may be connected to the wireless communications circuitry **38** with or without a passive matching network, as will be appreciated by those skilled in the art. The branch **71** is preferably connected to ground without a matching network, and the tuning branch **72** is floating (i.e., not connected to the wireless communications circuitry **38** or ground).

Generally speaking, the length of branches **70, 71,** and **72** are used to set the center frequency of operation. The square meandering or back-and-forth patterns of branches **70** and **72** illustrated in FIGS. 7 and 8 can be used to change electric length, which varies the center frequency. Moreover, different shapes of the branches **70, 71, 72** may also be used to provide different frequencies. For example, in addition to the illustrated meandering and straight line shapes, other geometries which may be used for these branches include a saw-toothed or triangular meander, a branch with a loop, etc. Various other shapes and combinations thereof may also be used to provide different frequency characteristics, as will be appreciated by those skilled in the art.

The branch **72** is positioned between the sections **77** and **78** of the main loop **64.** The position of the branch **72** between sections **77** and **78** may conveniently be varied without significant effect on frequency parameters.

The section **73** of the main loop **64** may also be used to control operating frequency. A variety of shapes and/or cut-outs may be used for the section **73.** These shapes may include, for example, a "dog bone," a half dog bone, a hairpin, a double hairpin, a hairpin with a loop, a meander, and a sawtooth. If an inductor is needed in certain embodiments to adjust S11 noise source impedance and/or widen bandwidth, a loop type pattern may be used, which creates an additional resonant tuning stage, as will be appreciated by those skilled in the art. If adequate space is available, straight-line portions may be used in the appropriate length. Yet, space is typically at a premium for internal cellular device antennas, and particularly so for compact models such as sliding phones, and thus one of the above-described shapes (or others) will likely be preferred.

The width and shape of the section **74** primarily controls low band gain. The length of section **74** also impacts the operating frequency. However, it should be noted that the lengths of the sections **70, 71, 72,** and **73** (i.e., the length of the entire antenna 35) also affects the operating frequency, as is the case with a typical dipole antenna.

Referring more particularly to the sections **79, 74,** and **80** of the main loop **64,** these sections preferably define a continuous loop starting at the connection point with branch **70** that wraps around and ends at the branch **71.** There is a gap in the main loop between branches **70** and **71** at the feed point, as seen in FIG. 6. The main loop **64** may be in a plurality of shapes, widths, and thicknesses. By way of example, the main loop **64** may be generally circular, rectangular, square, polygonal, etc., although other shapes may also be used.

Moreover, the section **74** may also have notches, patches, etc. Patches may be used to add surface area so that the section **74** can shape the beam. It should be noted that, in the case of a cellular telephone, the beam should preferably be directed away from the telephone, i.e., perpendicular to the plane of the PCB **37.** By way of example, the width of the antenna **35** may be about 7 cm or less, the height of the first section **61** may be about 1 to 3 cm, and the height of the second section **62** may be about 1 to 3 cm depending upon the given implementation.

Regarding the S 11 impedance characteristics, to provide wide bandwidth a good match is needed over the frequency range of interest. Thus, it is desirable to shrink the S 11 circle and then move the shrunken circle to the 50 Ohm center point, as will be appreciated by those skilled in the art. The area **73,** as well as other portions of the antenna **35,** may be used to shrink and/or move the S 11 circle, which is preferably done in a distributed fashion. Further, the matching network and meandering portions of the antenna **35** may also be used to move the S 11 circle toward the desired 50 Ohm center point. The center of the shrunken S 11 circle is less critical since it can advantageously be moved toward the 50 Ohm point as noted above in accordance with the present invention.

In some embodiments, it may be desirable to use an RF current blocking device (i.e., a decoupler/filter) at the connection between the upper and lower housings **24, 25.** To provide further noise reduction, in some embodiments the connector traces on the wireless circuit board **37** for the components in the upper housing **24** may be made perpendicular to the direction or axis of sliding of the upper housing and lower housing **25,** as will be appreciated by those skilled in the art. Furthermore, the location of the connector between the upper and lower housings **24, 25** may also affect the amount of RF current coupling, so different placements may be desired in different embodiments, as will also be appreciated by those skilled in the art.

General speaking, the above-described antenna **35** allows various shapes and lengths to be utilized to provide appropriate electrical lengths and current distribution. Some shapes are simple delay lines, while other shapes are designed to affect current in a particular area. As noted above, given unlimited space, many of the shapes and geometries described above may not be necessary. However, it is within the space constrained environments of mobile wireless communications devices, such as cellular telephones, where the above-described antenna features are particularly advantageous for providing desired performance over multiple operating bands.

Various changes in the basic layout of the antenna **35** may be made in certain embodiments. By way of example, the tuning branch **72** may be moved so that it extends from section **74** instead of area **73.** Other changes are also possible, as will be appreciated by those skilled in the art.

A method aspect of the invention is for making a mobile wireless communications device, such as the cellular telephone **20** discussed above, for a user **21** wearing an electronic hearing aid **22** adjacent an ear **23** of the user. The method may include slidably connecting the upper housing **24** and the lower housing **25** together for sliding relative to one another between the retracted position and the extended use position, as noted above. Further, the audio output transducer **28** is positioned adjacent the top end **26t** of the upper housing **24** to be accessible to the electronic hearing aid **22** of the user **21.**

Moreover, an audio input transducer **29** is positioned adjacent the bottom end **27b** of the lower housing **25** to be accessible to the mouth **31** of the user **21.** The method further includes positioning the antenna **35** adjacent the bottom end **27b** of the lower housing **25** so that the electronic hearing aid **22** of the user is further separated from the antenna **35** when the upper and lower housings **24, 25** are in the extended use position to thereby reduce undesired coupling from the antenna to the electronic hearing aid, as discussed above. It should be noted that the foregoing steps need not be performed in the exact order as described above.

A related method aspect of the invention is for making a mobile wireless communications device, such as the cellular telephone **20** discussed above, hearing aid compatible for a user wearing an electronic hearing aid **22.** The method similarly includes positioning the antenna **35** adjacent the bottom end **27b** of the lower housing **25** so that the electronic hearing aid **22** is further separated from the antenna when the upper and lower housings **24, 25** are in the extended use position.

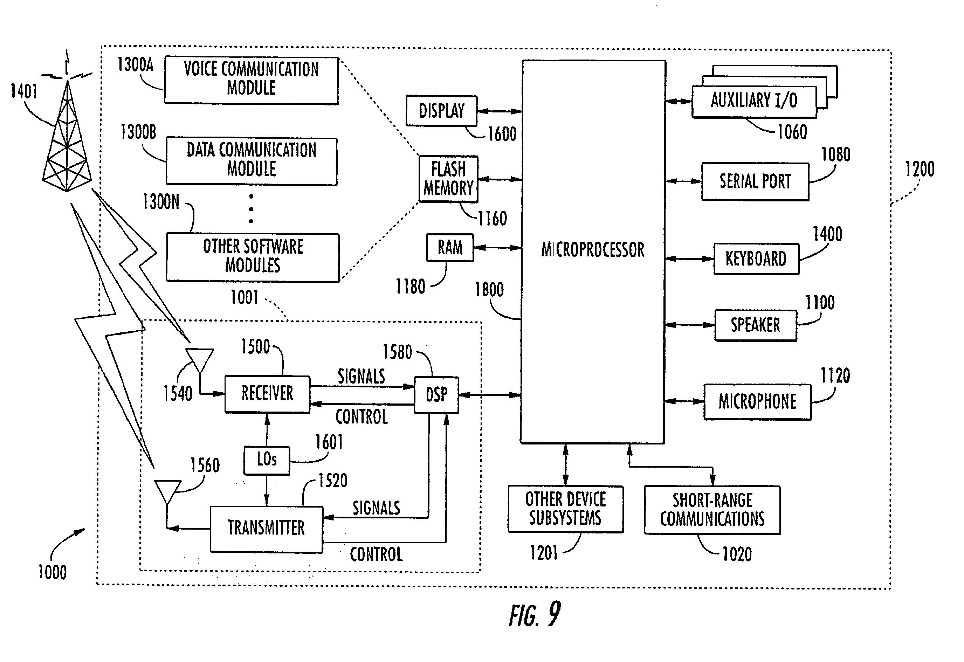

Exemplary components which may be used in accordance with the present invention are now described with reference to a handheld mobile wireless communications device **1000** is shown in FIG. 9. The device **1000** includes a housing **1200,** a keyboard **1400** and an output device **1600.** The output device shown is a display **1600,** which is preferably a full graphic LCD. Other types of output devices may alternatively be utilized. A processing device **1800** is contained within the housing **1200** and is coupled between the keyboard **1400** and the display **1600.** The processing device **1800** controls the operation of the display **1600,** as well as the overall operation of the mobile device **1000,** in response to actuation of keys on the keyboard **1400** by the user.

The housing **1200** may be elongated vertically, or may take on other sizes and shapes (including clamshell housing structures). The keyboard may include a mode selection key, or other hardware or software for switching between text entry and telephony entry.

In addition to the processing device **1800,** other parts of the mobile device **1000** are shown schematically in FIG. 9. These include a communications subsystem **1001;** a short-range communications subsystem **1020;** the keyboard **1400** and the display **1600,** along with other input/output devices **1060, 1080, 1100** and **1120;** as well as memory devices **1160, 1180** and various other device subsystems **1201.** The mobile device **1000** is preferably a two-way RF communications device having voice and data communications capabilities. In addition, the mobile device **1000** preferably has the capability to communicate with other computer systems via the Internet.

Operating system software executed by the processing device **1800** is preferably stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180**.

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM is preferably capable of organizing and managing data items, such as e-mail, calendar events, voice mails, appointments, and task items. The PIM application is also preferably capable of sending and receiving data items via a wireless network **1401.** Preferably, the PIM data items are seamlessly integrated, synchronized and updated via the wireless network **1401** with the device user's corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex^{™}, Data TAC^{™} or General Packet Radio Service (GPRS) mobile data communications networks, and also designed to operate with any of a variety of voice communications networks, such as AMPS, TDMA, CDMA, PCS, GSM, etc. Other types of data and voice networks, both separate and integrated, may also be utilized with the mobile device **1000**.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore requires a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device user may also compose data items, such as e-mail messages, using the keyboard **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, or a Bluetooth communications module to provide for communication with similarly-enabled systems and devices.

Many modifications and other embodiments of the invention will come to the mind of one skilled in the art having the benefit of the teachings presented in the foregoing descriptions and the associated drawings. Therefore, it is understood that the invention is not to be limited to the specific embodiments disclosed, and that modifications and embodiments are intended to be included within the scope of the appended claims.

## Claims

1. A mobile wireless communications device (20) for a user (21) wearing an electronic hearing aid (22) adjacent an ear (23) of the user, the mobile wireless communications device comprising:
an upper housing (24, and a lower housing (25) being slidably connected together for sliding relative to one another between a retracted position and an extended use position, said upper and lower housings each having respective top and bottom ends (26t, 26b and 27t, 27b), the top end of said upper housing being further separated from the bottom end of said lower housing when in the extended use position as compared to the retracted position ;
an audio output transducer (28) carried by said upper housing and accessible to the electronic hearing aid of the user adjacent the top end of said upper housing;
an audio input transducer (29) carried by said lower housing and accessible to a mouth (31) of the user adjacent the bottom end of said lower housing; and
an antenna (35) carried by said lower housing adjacent the bottom end thereof, said antenna comprising a dielectric substrate (37) and a plurality of conductive traces (64, 70, 71, 72) on said dielectric substrate;
**characterised in that** said antenna (35) comprises a single turn, main loop conductor (64) having a gap therein defining first and second ends of said main loop conductor, and a floating tuning branch (72) connected to said main loop conductor (64).

2. The mobile wireless communications device (20) of Claim 1 wherein the bottom (26b) of said upper housing (24) overlaps the top (27t) of said lower housing (25) in the extended use position defining an overlap region (36); and wherein said antenna(35) is below the overlap region (36).

3. The mobile wireless communications device (20) of Claim 1 further comprising a wireless circuit board (37) carried by said lower housing (25) and at least one wireless communications circuit (38) carried thereby, said at least one wireless communications circuit (38) being connected to said antenna (35).

4. The mobile wireless communications device (20) of Claim 1 wherein said antenna (35) is carried within said lower housing (25).

5. The mobile wireless communications device (20) of Claim 1 wherein said antenna (35) comprises a multi-frequency band antenna.

6. The mobile wireless communications device (20) of Claim 1 further comprising a release catch (40) for allowing movement of said upper housing (24) and said lower housing (25) between the retracted and the extended use positions.

7. The mobile wireless communications device (20) of Claim 1 further comprising a display (39) carried by said upper housing (24).

8. The mobile wireless communications device (20) of Claim 1 further comprising an input keypad (41) carried by said lower housing (25) comprising a plurality of multi-symbol keys (90).

9. The mobile wireless communications device (20) of Claim 8 wherein the symbols comprise letters; and wherein said multi-symbol keys(90) are arranged to define a QWERTY layout.

10. The mobile wireless communications device (20) of Claim 8 wherein at least some of said multi-symbol keys (90) have numeric indicia thereon, and wherein the at least some multi-symbol keys are arranged to define a telephone keypad layout.

11. The mobile wireless communications device (20) of Claim 1 further comprising a battery (42) carried by said lower housing (25).

12. A method for making a mobile wireless communications device (20) for a user (21) wearing an electronic hearing aid (22) adjacent an ear (23) of the user, the method comprising the steps of:
slidably connecting an upper housing (24) and a lower housing (25) together for sliding relative to one another between a retracted position and an extended use position, the upper and lower housings each having respective top and bottom ends (26t, 26b and 27t, 27b), the top end of the upper housing being further separated from the bottom end of the lower housing when in the extended use position as compared to the retracted position;
positioning an audio output transducer (28) adjacent the top end of the upper housing to be accessible to the electronic hearing aid of the user;
positioning an audio input transducer (29) adjacent the bottom end of the lower housing to be accessible to a mouth (31) of the user;
positioning an antenna (35) adjacent the bottom end of the lower housing so that the electronic hearing aid of the user is further separated from the antenna when the upper and lower housings are in the extended use position to thereby reduce undesired coupling from the antenna to the electronic hearing aid, the antenna comprising a dielectric substrate (37) and a plurality of conductive traces (64, 70, 71, *72) on the dielectric substrate;
the method **characterised in that** it further comprises:
providing the antenna (35) with a single turn, main loop conductor (64) having a gap therein defining first and second ends of said main loop conductor, and a floating tuning branch (72) connected to the main loop conductor (64).

13. The method of Claim 12 wherein the bottom (26b) of the upper housing (24) overlaps the top (27t) of the lower housing (25) in the extended use position defining an overlap region (36); and wherein the antenna (35) is below the overlap region.

14. The method of Claim 12 further comprising the step of positioning a wireless circuit board (37) in the lower housing (25) and at least one wireless communications circuit (38) thereon, and connecting the at least one wireless communications circuit to the antenna (35) .

15. The method of Claim 12 wherein the antenna (35) is carried within the lower housing (25).

16. The method of Claim 12 wherein the antenna (35) comprises a multi-frequency band antenna.

## Patentansprüche

1. Mobile drahtlose Kommunikationsvorrichtung (20) für einen Benutzer (21), der eine elektronische Hörhilfe (22) benachbart zu einem Ohr (23) des Benutzers trägt, wobei die mobile drahtlose Kommunikationsvorrichtung umfasst:
Ein oberes Gehäuse (24) und ein unteres Gehäuse (25), die für eine relative Verschiebung zueinander zwischen einer zurückgezogenen Position und einer ausgezogenen Benutzungsposition miteinander verschiebbar verbunden sind, wobei das obere und das untere Gehäuse jeweils Kopf- und Bodenenden (26t, 26b und 27t, 27b) aufweisen, wobei das Kopfende des oberen Gehäuses von dem Bodenende des unteren Gehäuses in der ausgezogenen Benutzungsposition verglichen mit der zurückgezogenen Position weiter getrennt ist,
ein Audio-Ausgabe-Transducer (28), der von dem oberen Gehäuse gehalten ist und zu der elektronischen Hörhilfe des Benutzers benachbart zu dem Kopfende des oberen Gehäuses zugänglich ist,
ein Audio-Eingabe-Transducer (29), der von dem unteren Gehäuse gehalten ist und zu einem Mund (31) des Benutzers benachbart zu dem Bodenende des unteren Gehäuses zugänglich ist, und
eine Antenne (35), die an dem unteren Gehäuse benachbart zu dessen Bodenende gehalten ist, wobei die Antenne ein dielektrisches Substrat (37) und eine Vielzahl von Leiterbahnen (64, 70, 71, 72) auf dem dielektrischen Substrat umfasst,
**dadurch gekennzeichnet, dass** die Antenne (35) eine einzelne Schleife, einen Hauptschleifenleiter (64), der einen Spalt darin, welcher erste und zweite Enden des Hauptschleifenleiters definiert, aufweist, und einen Gleit-Tuningarm (72), der mit dem Hauptschleifenleiter (64) verbunden ist, umfasst.

2. Mobile drahtlose Kommunikationsvorrichtung (20) nach Anspruch 1, wobei der Boden (26b) des oberen Gehäuses (24) den Kopf (27t) des unteren Gehäuses (25) in der ausgezogenen Benutzungsposition, die einen Überlappungsbereich (36) definiert, überlappt und wobei die Antenne (35) unter dem Überlappungsbereich (36) angeordnet ist.

3. Mobile drahtlose Kommunikationsvorrichtung (20) nach Anspruch 1, die weiterhin eine drahtlose Leiterplatte (37), welche von dem unteren Gehäuse (25) gehalten ist und wenigstens eine drahtlose Kommunikationsschaltung (38), welche daran gehalten ist, umfasst, wobei die wenigstens eine drahtlose Kommunikationsschaltung (38) mit der Antenne (35) verbunden ist.

4. Mobile drahtlose Kommunikationsvorrichtung (20) nach Anspruch 1, wobei die Antenne (35) in dem unteren Gehäuse (25) gehalten ist.

5. Mobile drahtlose Kommunikationsvorrichtung (20) nach Anspruch 1, wobei die Antenne (35) eine Mehrfrequenzbereichsantenne umfasst.

6. Mobile drahtlose Kommunikationsvorrichtung (20) nach Anspruch 1, die weiterhin eine Freigabeklinke (40) zum Gestatten einer Bewegung des oberen Gehäuses (24) und des unteren Gehäuses (25) zwischen der zurückgezogenen Position und der ausgezogenen Benutzungsposition umfasst.

7. Mobile drahtlose Kommunikationsvorrichtung (20) nach Anspruch 1, die weiterhin eine Anzeige (39), welche an dem oberen Gehäuse (24) gehalten ist, umfasst.

8. Mobile drahtlose Kommunikationsvorrichtung (20) nach Anspruch 1, die weiterhin ein Eingabetastaturfeld (41) umfasst, welches an dem unteren Gehäuse (25), das eine Vielzahl von Mehrsymbol-Tasten (90) umfasst, gehalten ist.

9. Mobile drahtlose Kommunikationsvorrichtung (20) nach Anspruch 8, wobei die Symbole Buchstaben umfassen und wobei die Mehrsymbol-Tasten (90) angeordnet sind, ein QWERTY-Layout zu definieren.

10. Mobile drahtlose Kommunikationsvorrichtung (20) nach Anspruch 8, wobei wenigstens einige der Mehrsymbol-Tasten (90) numerische Hinweise darauf aufweisen und wobei die wenigstens einigen Mehrsymbol-Tasten angeordnet sind, ein Telefon-Tastenfeld-Layout zu definieren.

11. Mobile drahtlose Kommunikationsvorrichtung (20) nach Anspruch 1, die weiterhin eine Batterie (42), die an dem unteren Gehäuse (25) gehalten ist, umfasst.

12. Verfahren zum Herstellen einer mobilen drahtlosen Kommunikationsvorrichtung (20) für einen Benutzer (21), der eine elektronische Hörhilfe (22) benachbart zu einem Ohr (23) des Benutzers trägt, wobei das Verfahren die Schritte umfasst:
Miteinander verschiebbares Verbinden eines oberen Gehäuses (24) und eines unteren Gehäuses (25) für eine relative Verschiebung zueinander zwischen einer zurückgezogenen Position und einer ausgezogenen Benutzungsposition, wobei das obere und das untere Gehäuse jeweils Kopf- und Bodenenden (26t, 26b und 27t, 27b) aufweisen, wobei das Kopfende des oberen Gehäuses von dem Bodenende des unteren Gehäuses in der ausgezogenen Benutzungsposition verglichen mit der zurückgezogenen Position weiter getrennt ist,
Positionieren eines Audio-Ausgabe-Transducers (28) benachbart zu dem Kopfende des oberen Gehäuses, um zu der elektronischen Hörhilfe des Benutzers zugänglich zu sein,
Positionieren eines Audio-Eingabe-Transducers (29) benachbart zu dem Bodenende des unteren Gehäuses, um zu einem Mund (31) des Benutzers zugänglich zu sein, und
Positionieren einer Antenne (35) benachbart zu dem Bodenende des unteren Gehäuses, derart, dass die elektronische Hörhilfe des Benutzers von der Antenne weiter getrennt ist, wenn sich das obere und das untere Gehäuse in der ausgezogenen Benutzungsposition befinden, um **dadurch** eine unerwünschte Kopplung von der Antenne mit der elektronischen Hörhilfe zu vermindern, wobei die Antenne ein dielektrisches Substrat (37) und eine Vielzahl von Leiterbahnen (64, 70, 71, 72) auf dem dielektrischen Substrat umfasst,
wobei das Verfahren **dadurch gekennzeichnet ist, dass** es weiterhin umfasst:
Versehen der Antenne (35) mit einer einzelnen Schleife, einem Hauptschleifenleiter (64), der einen Spalt darin, welcher erste und zweite Enden des Hauptschleifenleiters definiert, aufweist, und einem Gleit-Tuningarm (72), der mit dem Hauptschleifenleiter (64) verbunden ist.

13. Verfahren nach Anspruch 12, wobei der Boden (26b) des oberen Gehäuses (24) den Kopf (27t) des unteren Gehäuses (25) in der ausgezogenen Benutzungsposition, die eine Überlappungsbereich (36) definiert, überlappt und wobei die Antenne (35) unter dem Überlappungsbereich angeordnet ist.

14. Verfahren nach Anspruch 12, weiterhin umfassend den Schritt eines Positionierens einer drahtlosen Leiterplatte (37) in dem unteren Gehäuse (25) und wenigstens einer drahtlosen Kommunikationsschaltung (38) daran sowie Verbinden der wenigstens einen drahtlosen Kommunikationsschaltung mit der Antenne (35).

15. Verfahren nach Anspruch 12, wobei die Antenne (35) in dem unteren Gehäuse (25) gehalten ist.

16. Verfahren nach Anspruch 12, wobei die Antenne (35) eine Mehrfrequenzbereichsantenne umfasst.

## Revendications

1. Dispositif de communication sans fil mobile (20) pour un utilisateur (21) portant une prothèse auditive électronique (22) à proximité d'une oreille (23) de l'utilisateur, le dispositif de communication sans fil mobile comprenant :
un boîtier supérieur (24) et un boîtier inférieur (25) reliés l'un à l'autre de façon coulissante pour coulisser l'un par rapport à l'autre entre une position rétractée et une position d'utilisation sortie, lesdits boîtiers supérieur et inférieur ayant chacun des extrémités haute et basse respectives (26t, 26b et 27t, 27b), l'extrémité haute dudit boîtier supérieur étant en outre séparée de l'extrémité basse dudit boîtier inférieur lorsqu'elle est à la position d'utilisation sortie par comparaison à la position rétractée ;
un transducteur de sortie audio (28) porté par ledit boîtier supérieur et accessible à la prothèse auditive électronique de l'utilisateur à proximité de l'extrémité haute dudit boîtier supérieur ;
un transducteur d'entrée audio (29) porté par ledit boîtier inférieur et accessible à la bouche (31) de l'utilisateur à proximité de l'extrémité basse dudit boîtier inférieur ; et
une antenne (35) portée par ledit boîtier inférieur à proximité de son extrémité basse, ladite antenne comprenant un substrat diélectrique (37) et une pluralité de traces conductrices (64, 70, 71, 72) sur ledit substrat diélectrique ;
**caractérisé en ce que** ladite antenne (35) comprend une spire unique, un conducteur de boucle principal (64) dans lequel un entrefer définit des première et deuxième extrémités dudit conducteur de boucle principal, et une branche d'accord flottante (72) connectée audit conducteur de boucle principal (64).

2. Dispositif de télécommunication sans fil mobile (20) selon la revendication 1, dans lequel le bas (26b) dudit boîtier supérieur (24) chevauche le haut (27t) dudit boîtier inférieur (25) à la position d'utilisation sortie définissant une région de chevauchement (36) ; et dans lequel ladite antenne (35) est en dessous de la région de chevauchement (36).

3. Dispositif de télécommunication sans fil mobile (20) selon la revendication 1, comprenant en outre une carte de circuit sans fil (37) portée par ledit boîtier inférieur (25) et au moins un circuit de télécommunication sans fil (38) porté par celle-ci, ledit au moins un circuit de télécommunication sans fil (38) étant connecté à ladite antenne (35).

4. Dispositif de télécommunication sans fil mobile (20) selon la revendication 1, dans lequel ladite antenne (35) est portée à l'intérieur dudit boîtier inférieur (25).

5. Dispositif de télécommunication sans fil mobile (20) selon la revendication 1, dans lequel ladite antenne (35) comprend une antenne à bandes de fréquences multiples.

6. Dispositif de télécommunication sans fil mobile (20) selon la revendication 1, comprenant en outre un cliquet de retenue (40) destiné à permettre le mouvement dudit boîtier supérieur (24) et dudit boîtier inférieur (25) entre les positions rétractée et d'utilisation sortie.

7. Dispositif de télécommunication sans fil mobile (20) selon la revendication 1, comprenant en outre un afficheur (39) porté par ledit boîtier supérieur (24).

8. Dispositif de télécommunication sans fil mobile (20) selon la revendication 1, comprenant en outre un clavier d'entrée (41) porté par ledit boîtier inférieur (25), comprenant une pluralité de touches à symboles multiples (90).

9. Dispositif de télécommunication sans fil mobile (20) selon la revendication 8, dans lequel les symboles comprennent des lettres ; et dans lequel lesdites touches à symboles multiples (90) sont agencées de façon à définir une configuration de type QWERTY.

10. Dispositif de télécommunication sans fil mobile (20) selon la revendication 8, dans lequel au moins certaines desdites touches à symboles multiples (90) ont sur elles des signes numériques, et dans lequel au moins certaines des touches à symboles multiples sont agencées de façon à définir la configuration d'un clavier téléphonique.

11. Dispositif de télécommunication sans fil mobile (20) selon la revendication 1, comprenant en outre une batterie (42) portée par ledit boîtier inférieur (25).

12. Procédé de fabrication d'un dispositif de télécommunication sans fil mobile (20) destiné à un utilisateur (21) portant une prothèse auditive électronique (22) à proximité d'une oreille (23) de l'utilisateur, le procédé comprenant les étapes consistant à :
relier de façon coulissante un boîtier supérieur (24) à un boîtier inférieur (25) pour qu'ils coulissent l'un par rapport à l'autre entre une position rétractée et une position d'utilisation sortie, les boîtiers supérieur et inférieur ayant chacun des extrémités haute et basse respectives (26t, 26b et 27t, 27b), l'extrémité haute du boîtier supérieur étant en outre séparée de l'extrémité basse du boîtier inférieur lorsqu'il est à la position d'utilisation sortie par comparaison à la position rétractée ;
positionner un transducteur de sortie audio à proximité de l'extrémité haute du boîtier supérieur (28) afin qu'il soit accessible à la prothèse auditive électronique de l'utilisateur ;
positionner un transducteur d'entrée audio (29) à proximité de l'extrémité basse du boîtier inférieur afin qu'il soit accessible à la bouche (31) de l'utilisateur ;
positionner une antenne (35) à proximité de l'extrémité basse du boîtier inférieur afin que la prothèse auditive électronique de l'utilisateur soit séparée davantage de l'antenne lorsque les boîtiers supérieur et inférieur sont à la position d'utilisation sortie pour ainsi réduire le couplage indésirable de l'antenne avec la prothèse auditive électronique, l'antenne comprenant un substrat diélectrique (37) et une pluralité de traces conductrices (64, 70, 71, 72) sur le substrat diélectrique ;
le procédé étant **caractérisé en ce qu'**il consiste en outre à :
munir l'antenne (35) d'une spire unique, d'un conducteur de boucle principal (64) dans lequel un entrefer définit des première et deuxième extrémités dudit conducteur de boucle principal, et une branche d'accord flottante (72) connectée au conducteur de boucle principal (64).

13. Procédé selon la revendication 12, dans lequel le bas (26b) du boîtier supérieur (24) chevauche le haut (27t) du boîtier inférieur (25) lorsqu'il est à la position d'utilisation sortie en définissant une région de chevauchement (36) ; et dans lequel l'antenne (35) est en dessous de la région de chevauchement (36).

14. Procédé selon la revendication 12, comprenant en outre l'étape consistant à positionner une carte de circuit sans fil (37) dans ledit boîtier inférieur (25) et au moins un circuit de télécommunication sans fil (38) sur celle-ci, et à connecter l'au moins un circuit de télécommunication sans fil à l'antenne (35).

15. Procédé selon la revendication 12, dans lequel l'antenne (35) est portée à l'intérieur du boîtier inférieur (25).

16. Procédé selon la revendication 12, dans lequel l'antenne (35) comprend une antenne à bandes de fréquences multiples.
